# EUROPEAN PATENT SPECIFICATION

(11) **EP 3 532 679 B1**
(45) Date of publication and mention of the grant of the patent: **27.11.2024**
(21) Application number: 17783559.2
(22) Date of filing: 05.10.2017
(51) Int. Cl.: E03C 1/06

(54) **SLIDE RAIL MECHANISM**
GLEITSCHIENENMECHANISMUS
MÉCANISME DE RAIL DE COULISSEMENT

(30) Priority: 26.10.2016 GB 201618101
(43) Date of publication of application: 04.09.2019
(73) Proprietor: Kohler Mira Limited, Cheltenham, Gloucestershire GL52 5EP (GB)
(72) Inventor: WHITFIELD, Robin, Cheltenham Gloucestershire GL52 5EP (GB); WESTGATE, Simon, Cheltenham Gloucestershire GL52 5EP (GB); SCOTT, James, Cheltenham Gloucestershire GL52 5EP (GB); BURRIDGE, Nic, Cheltenham Gloucestershire GL52 5EP (GB)
(74) Representative: Barker Brettell LLP
(86) International application number: PCT/GB2017/053019
(87) International publication number: WO 2018/078322

(56) References cited:
- EP-A1- 1 321 588
- EP-A1- 1 921 214
- EP-A1- 2 642 033
- DE-U1- 202011 105 597
- DE-U1- 202011 105 597
- KR-A- 20120 035 521
- US-A- 4 360 159
- US-A1- 2011 222 958

## Description

The present invention relates to a slide rail mechanism, a shower slide rail system, and a kit for a shower slide rail system.

Shower heads can be fixed to a wall using a slide rail system. The shower head is held in a holder that allows the shower head to be swivelled, tilted, removed and replaced. The holder is part of a chassis that is fixed to a rail that extends vertically along the wall. The chassis is able to move up and down the rail, and can be secured in place, to allow the height of the shower head to be set.

It is known to secure the chassis using a clamp mechanism that can be tightened and loosened using a rotatable handle, allowing repositioning of the shower head. This arrangement requires the user to adjust the position of the shower head with both hands, one to operate the clamp mechanism and the other to move the chassis along the rail. This can make adjustment difficult for some users with limited dexterity.

Document EP 1 321 588 A1 discloses a sliding rail consisting of two standards reciprocally defining a slotting wherein there is housed a shower support, into which there is obtained a recess intended to partly house a block forming a sliding guide for the support on the slotting, said sliding being allowed by the horizontal pivoting of the support relative to the block and by the consequent insertion or removal of the teeth provided on the support.

Document EP 1 921 214 A1 discloses a shower head adjustment assembly consisting of a guide and a slide fastened to the shower head support and comprising a cam element rigidly connected to the shower head support, and a catch element hinged to the cam element. Specifically, the cam element and the catch element are arranged on opposite sides of a sliding wall of the guide and define a reversible locking position of the slide by compressing the sliding wall from opposite sides.

According to the invention as defined by claim 1, there is provided a slide rail mechanism having a chassis for holding a shower head, wherein the chassis is slideable along a slide rail, and includes a holding means for holding the chassis at a position along the slide rail wherein the holding means is actuated by movement of the chassis.

Embodiments of the invention will now be discussed, by way of example only, with reference to the accompanying drawings, in which:
**Figure 1** illustrates a shower rail system according to an unclaimed embodiment;
**Figure 2** illustrates the slide rail from the system of Figure 1;
**Figure 3A** illustrates a front perspective view of the first chassis member of the slider assembly from the system of Figure 1;
**Figure 3B** illustrates a rear perspective view of the first chassis member of Figure 3A;
**Figure 4** illustrates the brake saddle of the slider assembly from the system of Figure 1;
**Figure 5A** illustrates a front perspective view of the brake shoe of the slider assembly from the system of Figure 1;
**Figure 5B** illustrates a rear perspective view of the brake shoe of Figure 5A;
**Figure 6A** illustrates a perspective view, partly in section, of the assembled slide rail system of Figure 1;
**Figure 6B** illustrates a side view, partly in section, of the assembled slide rail system of Figure 1;
**Figure 7** illustrates a top view of a shower rail system according to an embodiment of the invention;
**Figure 8** illustrates a rear perspective view of the system of Figure 7;
**Figure 9** illustrates a rear perspective view of the slider assembly of the system of Figure 7
**Figure 10** illustrates a side cross-sectional view of the slider assembly system of Figure 7; and
**Figure 11** illustrates a perspective cross-sectional view of the slider assembly system of Figure 7.

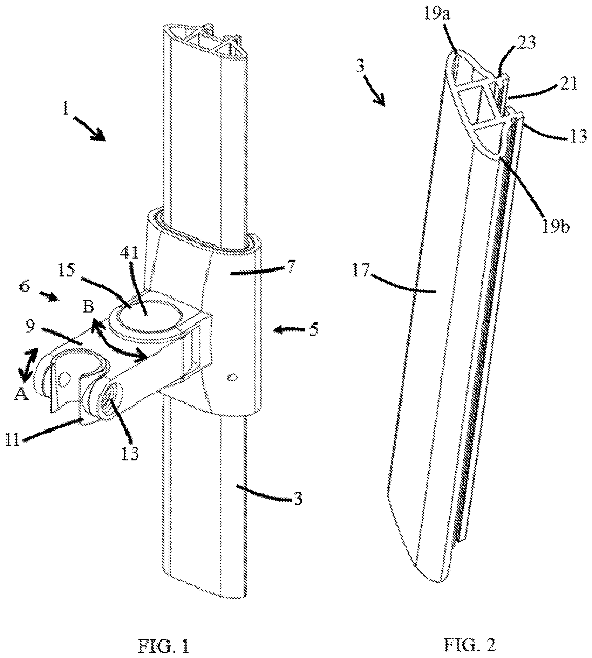

Figure 1 illustrates a shower rail system 1 that can be used for supporting a shower head (not shown), which may, for example, be over a bath or shower tray (not shown). The system 1 includes a slide rail 3, which is fixed vertically along a wall (not shown) and a slider assembly 5 for holding the shower head. As will be discussed below in more detail, the slider assembly 5 is slideable along the slide rail 3, to set the height of the shower head.

Figure 1 only shows a section of the slide rail 3, and it will be appreciated that the slide rail 3 may extend for any length, and be fixed to the wall in any suitable manner, as is known in the art. In one example, the slide rail 3 may have a length of 1 metre or 0.6 metre. The slide rail 3 may include stops (not shown) to prevent the slider assembly 5 being slid off the ends of the slide rail 3.

In the example shown in Figure 1, the slider assembly 5 includes a chassis 6 having a first chassis member 7, which is slidably attached to the slide rail 3, and a second chassis member 9, including a grip 11. The grip 11 is formed of a partially open cylinder, and is sized for holding the shower head by friction or mechanical fit. The shower head may comprise a handset connected to a source of water (not shown) by a flexible hose (not shown). The water source may be, for example, a mixer valve or an instantaneous electric water heater. The water source may provide a supply of temperature controlled water to the shower head. The shower head may be detachable from the grip 11.

The grip 11 is connected to the second chassis member 9 by a first pivot 13, such that the shower head can be tilted around a horizontal axis (as shown by arrow A). The second chassis member 9 is in turn connected to the first chassis member 7 by a second pivot 15, so that the shower head may be rotated around a second axis, parallel to the slide rail 3, and perpendicular to the first axis (as shown by arrow B).

Figure 2 shows the slide rail 3 in more detail. As can be seen from Figure 2, the slide rail 3 is of substantially hollow cross section, with a substantially flat front face 17, and curved edges 19a, 19b. The rear face 21 is formed with a pair of projections 23 that can be used for fixing the slide rail 3 to the wall. In this example, the slide rail 3 is fixed to the wall along its length.

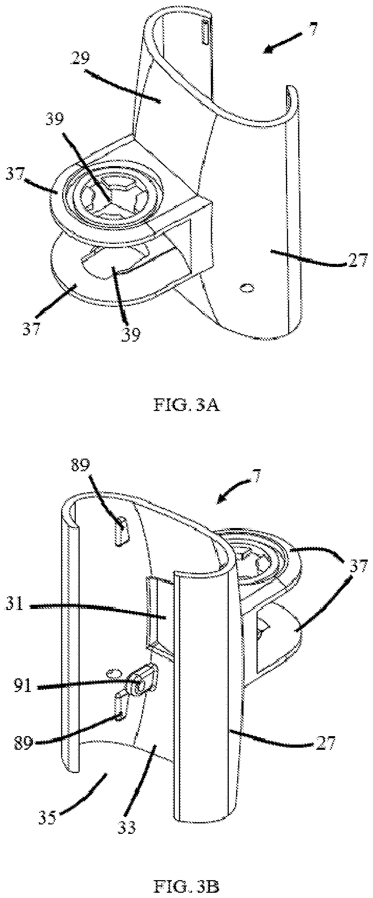

Figures 3A and Figure 3B show the first chassis member 7 in more detail. The first chassis member 7 is formed of a vertically extending wall 27 that is shaped to fit around the brake saddle 43 and slide rail 3 The rear face 35 of the first chassis member 7 is open to accommodate the projections 23 for attaching the slide rail 3 to the wall. A pair of horizontal arms 37 extend from the front face 29 for connection to the second chassis member 9. The second chassis member 9 is received between the arms 37, and then connected by a pin 41 (Figure 1) passing through openings 39 in the arms 37 and second chassis member 9 to form the second pivot 15.

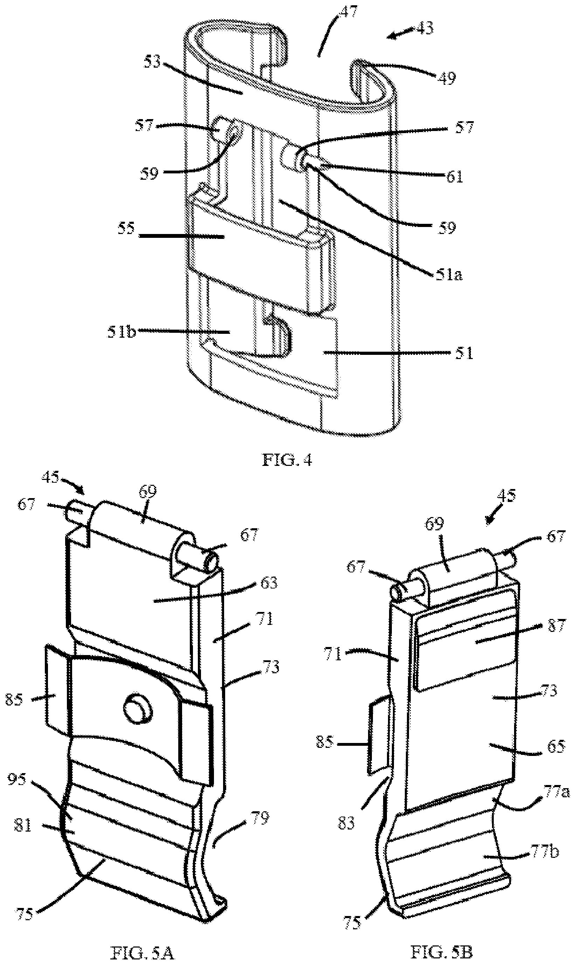

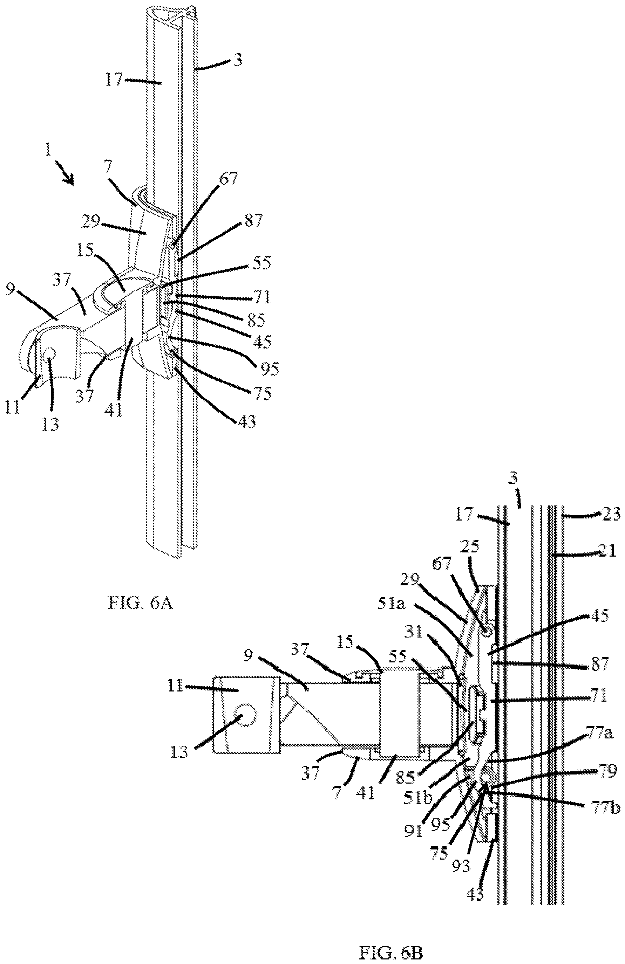

The slider assembly 5 further includes a brake saddle 43 and a brake shoe 45. Figure 4 shows the brake saddle 43, and Figures 5A and 5B show the brake shoe 45. As best shown in Figures 6A and 6B, the brake saddle 43 and brake shoe 45 are received inside the first chassis member 7, between the first chassis member 7 and the slide rail 3. These components co-operate to grip the slide rail 3, to hold the slider assembly 5 (and hence the shower head) at a chosen height.

As with the first chassis member 7, the brake saddle 43 is formed to fit around the slide rail 3, with an opening 47 in the rear face 49 to accommodate the projections 23 for fitting the slide rail 3 to the wall.

The brake saddle 43 also includes an opening 51 in its front face 53. The opening 51 includes a narrow rectangular top section 51a and a wider rectangular base section 51b, such that it is substantially T-shaped. The opening 51 is divided into two by a rectangular wall projection 55 (which may also be described as a bridge 55, as it straddles the opening 51 in the embodiment shown) that is formed above the wider base section 51b. The wall projection 55 is spaced from the front face 53 of saddle 43, and is sized to fit into a recess 31 in the inner face 33 of the first chassis member 7 (Figure 3B). At the top of the opening 51, a pair of projections 57 are provided with cylindrical through holes 59. Recesses 61 (one only shown) in the front face 53 of the brake saddle 43 align with the through holes 59.

The brake shoe 45 is generally of the form of an elongate body 71 having a rear face 65 (see Figure 5B) arranged to face the front face 29 of the slide rail 3, and an opposing front face 63 (see Figure 5B) arranged to face the inner face 33 of the first chassis member 7.

The top of the brake shoe 45 includes a cylindrical hinge pin 67 mounted on a hinge mount 69, such that the hinge pin 67 projects from both sides of the brake shoe 45. The hinge pin 67 is sized to be received in the through holes 59 in the projections 57 on the brake saddle 43 and the recesses 61 to form a pivot connection at the top of the brake shoe 45.

The body 71 of the brake shoe 45 includes a substantially rectangular portion 73 towards the top, and a shaped cam region 75 at the base. The shaped cam region 75 is formed of a pair of cam surface 77a, 77b that are angled such that, when the shower rail system 1 is assembled, the cam surfaces 77a, 77b extend obliquely to the slide rail 3.

The cam surfaces 77a, 77b form a space 79 on the rear face 65 of the brake shoe 45, and an outward facing projection 81 on the front face 63, with an apex 95. The maximum spacing between the cam surfaces 77a, 77b and the slide rail 3 is at the apex. In the unclaimed embodiment being described, the cam region 75 is symmetrical about the apex 95. In alternative unclaimed embodiments, the cam region 75 may not be symmetrical about the apex 95.

Immediately above the cam region 75, the body 71 of the brake shoe 45 includes a recess 83 on the front face 63. A resiliently deformable spring member 85 is mounted in the recess 83. Above this, the body 71 of the brake shoe 45 includes a recess on the rear face 65. A brake pad 87, formed of rubber, EPDM or other high friction material is mounted in the recess. The brake pad 87 is adjacent the hinge mount 69.

Figures 6A and 6B show the slider assembly 5 mounted on the slide rail 3.

The brake shoe 45 and brake saddle 43 are arranged such that when the brake shoe 45 is mounted on the brake saddle 43 through the hinge connection, the region of the front face 63 of the shoe 45 opposite the brake pad 87 is positioned within the top section 51a of the opening 51 in the brake saddle 43, and the projection 81 on the base part of the shoe brake 45 projects through the lower section 51b of the opening 51.

The spring member 85 seats against the wall projection 55 of the brake saddle 43 and biases the brake shoe 45 towards the front face 17 of the slide rail 3.

The first chassis member 7 fits over the assembled brake saddle 43 and brake shoe 45 and is aligned by spacers 89 (Figure 3B) on the inner front face 33 of the first chassis member 7. The inner front face 33 of the first chassis member 7 includes a tab 91 projecting perpendicular to the face 33, into the volume defined by the first chassis member 7. The tab 91 is adjacent the cam region 75 and includes a cam pin 93 projecting perpendicular to the tab 91 into the concave space 79 defined by the cam surfaces 77a, 77b.

In normal use, the cam pin 93 rests at the apex 95 formed between the two cam surfaces 77a, 77b. In this position, the brake pad 87 engages with the front face 17 of the slide rail 3 under the biasing of the spring 85 and prevents movement of the slider assembly 5 relative to the slide rail 3. In this way the position of the shower head is fixed.

If a user wants to move the shower head higher or lower, they push or pull the chassis 6 up or down the slide rail 3. This causes the cam pin 93 to move up the first cam surface 77a or down the second cam surface 77b. This causes the brake shoe 45 to rotate around the hinged connection, lifting the brake pad 87 away from the front face 17 of the slide rail 3 against the biasing of the spring 85, and allowing the whole slider assembly 5 to be moved up or down. When the user releases the chassis 6, the spring 85 causes the pin 93 to return to the apex 95, and the brake pad fully reengages the rail 3 to secure the slider assembly 5 at the selected position along the length of the slide rail 3.

The brake pad 87 holds the slider assembly 5 in place by providing a constant frictional force. The friction should be sufficient that it is not overcome by the weight of the slider assembly 5 and shower head. Therefore, the user must provide a force over a threshold, determined by the spring 85, before the cam pin 93, and hence slider assembly 5 are moved. The force may be applied by the user pushing or pulling a part of the chassis 6 directly or indirectly, for example through the shower head or through a water supply hose connected to the shower head.

In the unclaimed embodiment being described, when the slider assembly 5 passes along any section of the slide rail 3 which needs a higher or lower amount of force as compared to the expected value (e.g. due to higher friction resulting from a scratched rail surface), the cam regulates friction of the brake shoe 45 accordingly to compensate for the difference. Such unclaimed embodiments may be described as "self-regulating" or "constant force" systems as the friction is adjusted to maintain an at least substantially constant level of force requirement.

In the unclaimed embodiment being described, the cam pin 93 regulates friction of the brake shoe 45 because the extent to which the cam pin 93 moves along the cam surface 77a, 77b increases with increased friction, and decreases with decreasing friction. As such, if the friction between the brake pad and the slide rail 3 increases for any reason then the brake pad 87 will 'drag' more and the slider assembly 5 will move accordingly to reduce the spring pressure, balancing the force. Conversely, if the friction between the brake pad 87 and the slide rail 3 reduces, then the cam 93, 75 will operate proportionally to increase spring pressure.

For example, if the slider assembly 5 encounters a stiffer section of the slide rail 3 (for example due to dirt or other reside on the slide rail, or a lack of a lubricant such as water or soap present on another part of the slide rail) then the brake pad 87 tends to 'slow down' on at this point on the rail 3. Continued upward or downward force from the user causes the chassis 6 to continue moving relative to the brake shoe 45 and cam surfaces 77a, 77b. This continued movement forces the tab 91 and cam pin 93 (part of the chassis 6) to move relative to the cam surfaces 77a, 77b (part of the brake shoe 45), moving the shoe 45 either in or out and thus adjusting the force relatively until the stiff section is traversed. At this point, the lesser force on the brake shoe 45 reverses the process and reapplies the relevant pressure.

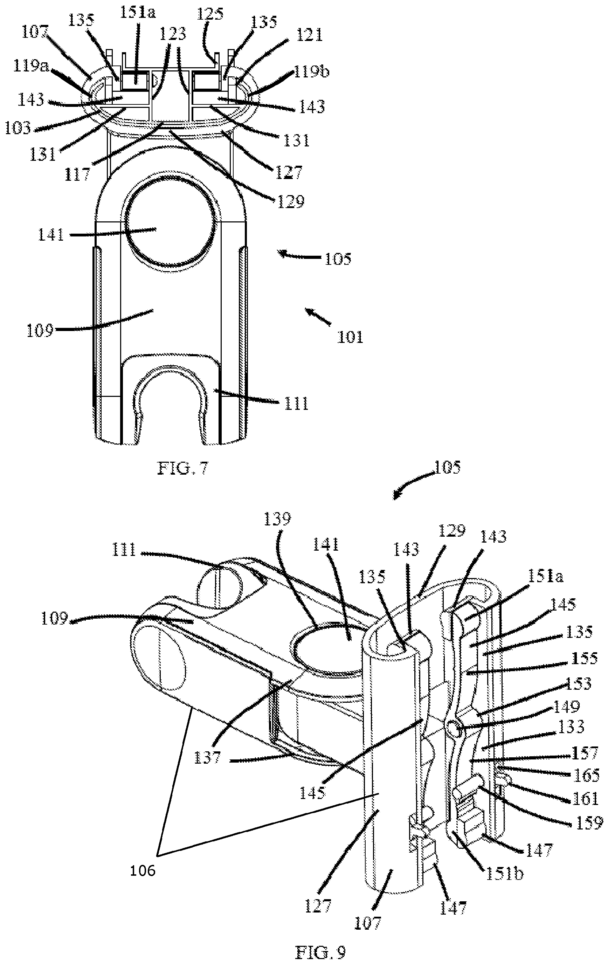

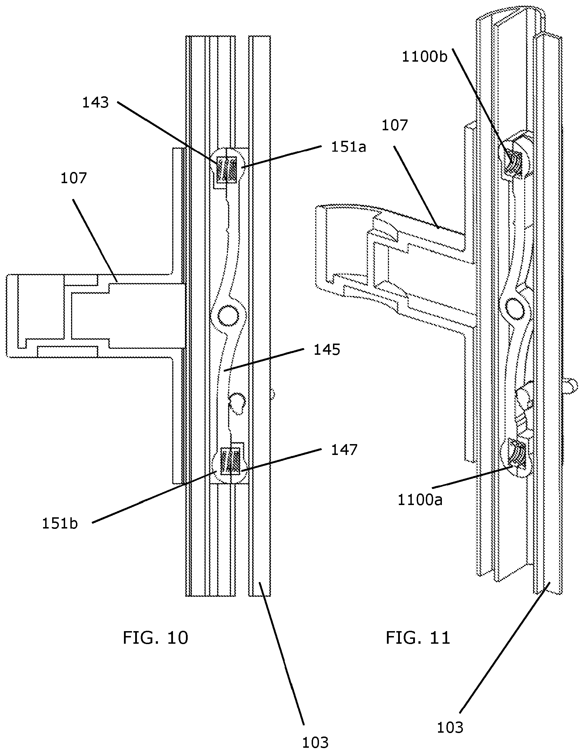

Figures 7 to 11 illustrate an alternative shower rail system 101. As with the first example discussed above, the shower rail system includes a slide rail 103, and a slider assembly 105 mounted on the slide rail 103. The slider assembly 105 includes a chassis 106 having a first chassis member 107 and a second chassis member 109, in a similar manner as discussed above, although in this example, the arms 137 are formed in the second chassis member 109, and fit around a projection extending from the first chassis member 107. It will be appreciated that this could be applied to the first example and vice versa.

As shown from Figures 7 to 11, the slide rail 103 and slider assembly 105 are of a different construction to that of the first example discussed above.

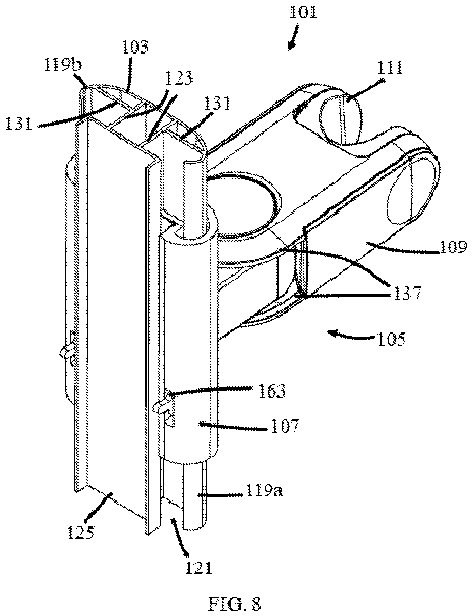

Figures 7 and 8 show the slide rail 103 of the second example. As can be seen, the slide rail 103 is of hollow construction, and includes a front face 117 with a substantially flat central portion, and curved edges 119a, 119b. However, the rear face 121 of the slide rail 103 is open. A pair of projections 123 extend from the front face 117, through the hollow centre, and out of the rear face 121. A pair of flat cross members 131 extend from the curved edges 119a, 119b to the projections 123, in the hollow centre of the slide rail 103. A brace 125, having a face parallel to the flat cross members 131 of the slide rail 103, extends vertically from the projections 123. The brace 125 is used for spacing the slide rail 103 from the wall (not shown).

In this example, the first chassis member 107 is formed of a wall 127 having an at least substantially flat front face 129, and edges shaped to fit around the slide rail 103. The wall 127 may be fully curved to fit in other embodiments. The wall 127 has an opening 133 formed in the back of the first chassis member 107 to accommodate the projections 123 and brace 125 of the slide rail 103. On each edge of the opening 133, a vertical wall 135 extends vertically, at a right angle to the rear face 121 of the slide rail 103, into the centre of the slide rail 103. At or near the top of each wall 135, a first brake stop 143 projects at a right angle to the wall 135, further into the opening on the rear face 121. At or near the bottom of each vertical wall 135, a second brake stop 147 projects at a right angle to the wall 135, further into the opening on the rear face 121. The brake stops 143, 147 only extend a short distance vertically, and still provide sufficient opening for the projections 123 when the first chassis member 107 is fitted to the slide rail 103.

At or near the centre of each wall 135 (vertically and horizontally) a brake pivot 149 is provided. A brake arm 145 is mounted on one of the brake pivots 149, extending vertically along the wall 135. The brake arm 145 is mounted on the pivot 149 such that it can rotate about an axis through the centre of the pivot 149, perpendicular to the slide rail 103, and the wall 135.

At a first end of the brake arm 145, a first brake end 151a is formed. At a second end of the brake arm 145, a second brake end 151b is formed. The brake arm 145 includes an annular hub 153 arranged around the brake pivot 149. A first arm section 155 extends between the hub 153 and the first brake end 151a, and a second arm section 157 extends from the hub 153 to the second brake end 151b.

The first arm section 155 is connected to the hub 153 on one side of the pivot 149, towards the front face 129 of the slider 107. The first arm section 155 is curved so that the first brake end 151a is positioned on the side of the first brake stop 143 facing the brace 125 of slide rail 103.

The second arm section 157 is connected to the opposite side of the hub 153 to the first arm section 155. The second arm section 157 is curved such that the second brake end 151b is positioned on the side of the second brake stop 147 facing the cross member 131 of slide rail 103.

The brake arm 145 is biased by a spring 1100b acting between first brake stop 143 and brake end 151a so that the brake end 151a engages the brace 125 and the brake end 151b engages the cross member 131 with a force sufficient to hold the slider assembly 105 in any selected position along the length of the slide rail 103.

A pin 159 is fitted to the lower part of the vertical wall 135, adjacent the brake arm 145. The pin 159 extends out of the wall, parallel to the brake stops 143, 147, and engages the second arm section 157. The pin 159 is formed with a cam projection 161. A manual mechanism 163, fitted in an aperture 165 in the rear face 121 of the first chassis member 107, adjacent the pin 159 is provided to rotate the cam projection to adjust the position of the brake ends 151a, 151b relative to the brake stops 143, 147.

In use, the first chassis member 107 is fitted over the slide rail 103. The first brake stop 143 rests against the cross member 131, and the first brake end 151a rests against the brace 125 under the biasing of the spring 1100b. The second brake stop 147 rests against the brace 125, and the second brake end 151b rests against the cross member 131 under the biasing of the spring 1100a. In alternative or additional embodiments, a single spring, or more than two springs, may be used.

Without input from the user, the biasing of the brake arm 145 provides a constant friction force holding the first chassis member 107 in place.

When a user applies a force to move the slider assembly 105 up the rail 103, for example by pushing the first chassis member 107, the force tends to cause the brake stops 143, 147 to lift away from the slide rail 103 in the embodiment shown (in some embodiments it is possible for these stops to remain in contact with the slide rail 103, but with a very low, and preferably at least substantially zero Newtons (0N) force therebetween). As a result, the frictional force is reduced and the slider assembly 105 can move up the slide rail 103.

When the user applies an upward force to the arm projection 109 this generates a moment of rotation which relaxes pressure on the fixed brake stops 143 and 147 so that only the brake ends 151a, 151b (which in this case take the form of sprung pads) remain in contact with the rail 103 under the biasing spring force and so resist the upward force. The slider assembly 105 can then move up the slide rail 103.

Thus, the brake arms 145 generally do not rotate - rather the chassis 107 rotates with respect to the brake arm 145. The chassis rotation is generally only slight, but sufficient that pressure is taken off the brake stops 143 and 147.

Once the user stops moving the slider assembly 105 the brake arm 145 applies sufficient frictional force to hold the slider assembly 105 in position. More particularly, in the embodiment being described, the brake stops 143, 147 return to contact with the slide rail 103, so applying a sufficient frictional force to hold the slider assembly 105 in position.

In the embodiment being described, when the system 101 is at rest, the brake pads and brake ends provide (for example) 10 Newtons of force to the slide rail 103, in this case as a result of the biasing springs 1100a, 1100b. The user then applies an upward force to the second chassis member 109 which provides a rotational moment. This moment may not be sufficient for the chassis 107 to rotate. In this example, the chassis 107 will only rotate when the rotational moment exceeds 10N. Before it reaches this point, however, the rotational moment causes a decrease in pressure on the brake pads and brake ends. Thus, a pressure can be applied which will not (or at least only negligibly) rotate the chassis 107, but will nonetheless reduce the brake pad force to a point where the chassis 107 can slide on the rail 103.

The skilled person will appreciate that the mechanism also has an effect on downwards forces applied by a user.

When a user applies a force to move the slider assembly 105 down the slide rail 103, for example by pulling the first chassis member directly or indirectly via the hose, the force tends to cause the chassis 106 to rotate to increase the frictional force on the brake pads 143, 147 so that it is harder to move the slider assembly down the slide rail 103 than to push it up the slide rail 103. Once the user stops moving the slider assembly 105 the brake arm 145 applies sufficient frictional force to hold the slider assembly 105 in position.

Most users generally pull the chassis 107 down the slide rail 103 by pulling on the hose of a mounted showerhead (not shown). Other users pull down on the second chassis member 109. The downwards pull tends to create a rotational moment which has the opposite effect of the situation above - i.e. the fixed brake stops 143 and 147 are pressed even more firmly against the slide rail 103. Thus, to pull the chassis assembly 105 down the rail 103 a user must overcome this additional pressure on the brake pads 143 and 147, as well as the pressure from the brake ends 151a, 151b. However, it is still the chassis 107 which rotates slightly to provide this moment.

The frictional force holding the slider assembly 105 in place should be sufficient that it is not overcome by the weight of the slider assembly 105 and shower head. Furthermore, the user must provide a force over a threshold in order to move the slider assembly 105 up or down the slide rail 103. In this example the force to move the slider assembly 105 up the slide rail 103 is lower than the force to move the slider assembly 105 down the slide rail 103.

From the above, the skilled person will appreciate that the change in force which results from the mechanism being moved up or down the rail is a result of change in pressure between the brake pads 143 and 147 and brake ends 151a, 151b and the slide rail 103. This change in force is achieved by rotation of the chassis 107.

The skilled person will appreciate that, in additional or alternative embodiments, the configuration may be adjusted so as to require a greater force to push the slider 105 up as opposed to down, or the forces required may be equal.

In this example, the brake arm 145 is made of the same material as the brake ends 151a, 151b such that the brake arm and ends may be formed as a single part. In alternative embodiments, the brake arm 145 may be made of a different material from the brake ends 151a, 151b. For example, a material with lower friction may be chosen for the brake ends 151a, 151b so as to facilitate the slider assembly 105 moving up or down the slide rail 103 when the user applies sufficient force, or a higher friction material may be chosen to increase grip.

In the discussion above of the second example, a single brake arm 145 is provided on one of the pivots 149. It will be appreciated that the brake arm 145 may be provided on either pivot 149. Alternatively, two brake arms 145 may be provided, one on each pivot 149.

In the first and second examples discussed above, the slide rail 3, 103 may be formed of any suitable material, such as moulded or extruded plastics, or metal such as stainless steel. The slider assembly 5, 105 may also be formed of any suitable material, such as moulded or extruded plastics.

In the first and second examples discussed above, the holding mechanism is engaged and released automatically. There is no manual locking or unlocking of the holding mechanism, instead the holding mechanism is released when the slider assembly 5, 105 is moved relative the rail 3, 103 by the user rather than by an active releasing action prior to moving the slider assembly 5, 105, and is re-engaged to hold the slider assembly 5, 105 in position when the slider assembly 5, 105 is released.

It will be appreciated that any suitable automatic holding means may be used, instead of the ones discussed above.

The shape and construction of the slide rail 3, 103 and slider assembly 5, 105 discussed above are given by way of example. The slide rail 3, 103, and slider assembly 5, 105 may be any suitable shape and construction.

For example, the slide rail 3, 103, may have circular or other shaped cross section, and, where it is not necessary for components of the system to project into the centre of the slide rail 3, 103, the slide rail 3, 103 may be solid rather than hollow.

Furthermore, the slide rail 3, 103 may be fixed to the wall at separate fixing points, or all along its length. Alternatively, the slide rail 3, 103 may be fixed to the wall in any other suitable way.

The slider assembly 5, 105 may have any shape that accommodates the holding mechanism.

The construction of the slider assembly 5, 105 discussed above is by way of example only, particularly with reference to how the shower head is held, tilted and rotated. Any suitable chassis 6, 106 may be used with the slider assembly 5, 105, as is known in the art.

The slider assembly 5, 105 can be used to hold a shower head at a fixed height, and allow the height to be adjusted. The slider assembly 5, 105 with the slide rail 3, 103, provides the slide rail system 1, 101.

It will be appreciated that the slide rail system 1, 101 may be provided as a kit of parts to be installed on a wall. Furthermore, the grip may be compatible with existing shower head fittings.

## Claims

1. A slide rail mechanism having a chassis (107) for holding a shower head, wherein the chassis (107) is slideable along a slide rail (103), and includes a holding means for holding the chassis (107) at a position along the slide rail (103), wherein the holding means is actuated by movement of the chassis (107); the holding means includes a braking element (151a, b) arranged to engage the slide rail (103) to prevent movement of the chassis (107) relative to the rail (103); the braking element (151a, b) being arranged on a brake carrier (145); and the brake carrier (145) is mounted pivotally with respect to a body of the chassis (107); the brake carrier (145) is pivoted at the centre of the brake carrier (145), and wherein the rotational position of the chassis (107) is controlling the level of frictional force;the brake carrier (145) includes a projection forming the braking element (151a, b) at one end, arranged to engage with the slide rail (103), and apply the frictional force when the chassis (107) is sufficiently rotated; the brake carrier (145) is biased by a spring (1100a, b) to engage the slide rail (103); and wherein movement of the chassis relative to the slide rail (103) in a first linear direction causes rotation of the chassis (107) in a first rotational direction to reduce the frictional force applied to the slide rail (103).

2. The slide rail mechanism of claim 1, wherein the braking element applies a constant frictional force to the slide rail, when engaged, to prevent movement of the chassis.

3. The slide rail mechanism of any preceding claim, wherein the brake carrier includes a projection at both ends, arranged to engage with the slide rail, and apply the frictional force when the chassis is sufficiently rotated.

4. The slide rail mechanism of any preceding claim, wherein movement of the chassis relative to the slide rail in a second linear direction, opposite the first linear direction causes rotation of the chassis in a second rotational direction, opposite the first rotational direction, to increase the frictional force applied to the slide rail.

5. A shower slide rail system having a slide rail, and a slide rail mechanism according claims 1 to 4, the slide rail mechanism comprising a chassis for holding a shower head, the chassis being slideable along the slide rail, and including a holding means for holding the chassis at a position along the slide rail, wherein the holding means is actuated by movement of the chassis.

6. The shower slide rail system of claim 5, wherein the holding means is arranged to regulate friction between the holding means and the slide rail so as to maintain an at least substantially constant level of force requirement for movement in a given direction.

7. The shower slide rail system of claim 5 or claim 6, wherein the holding means is arranged such that movement of the chassis relative to the slide rail in a first linear direction requires a higher level of force than movement of the chassis relative to the slide rail in a second linear direction which is different from the first linear direction.

8. A kit for providing the shower slide rail system of any of claims 5 to 7, the kit including at least the slide rail and a slide rail mechanism according claim 1.

9. A method for altering the height of the shower head, wherein the shower head is initially held at a first height on the shower rail by the slide rail mechanism of claim 1, the method including moving a chassis holding the shower head from the first position to a second positon on the rail, above or below the first position, wherein moving the chassis automatically releases the holding means, and the holding means automatically reengages when the slider is not moved.

10. The method of claim 9, wherein the holding means regulates friction between the holding means and the slide rail so as to maintain an at least substantially constant level of force requirement for movement in a given direction.

11. The method of claim 9 or claim 10, wherein movement of the chassis relative to the slide rail in a first linear direction requires a higher level of force than movement of the chassis relative to the slide rail in a second linear direction which is different from the first linear direction.

## Patentansprüche

1. Gleitschienenmechanismus, der ein Gestell (107) zum Halten eines Duschkopfes aufweist, wobei das Gestell (107) entlang einer Gleitschiene (103) verschiebbar ist und ein Haltemittel zum Halten des Gestells (107) in einer Position entlang der Gleitschiene (103) beinhaltet, wobei das Haltemittel durch Bewegen des Gestells (107) betätigt wird; das Haltemittel ein Bremselement (151a, b) beinhaltet, das angeordnet ist, um in die Gleitschiene (103) einzugreifen, um Bewegung des Gestells (107) in Bezug zur Schiene (103) zu verhindern; das Bremselement (151a, b) auf einem Bremsträger (145) angeordnet ist; und der Bremsträger (145) in Bezug auf einen Körper des Gestells (107) schwenkbar angebracht ist; der Bremsträger (145) in der Mitte des Bremsträgers (145) geschwenkt wird, und wobei die Drehposition des Gestells (107) das Maß der Reibungskraft steuert; der Bremsträger (145) einen Vorsprung beinhaltet, der an einem Ende das Bremselement (151a, b) bildet, das angeordnet ist, um in die Gleitschiene (103) einzugreifen und die Reibungskraft auszuüben, wenn das Gestell (107) ausreichend gedreht wird; der Bremsträger (145) durch eine Feder (1100a, b) vorgespannt wird, um in die Gleitschiene (103) einzugreifen; und wobei Bewegung des Gestells in Bezug zur Gleitschiene (103) in einer ersten linearen Richtung Drehung des Gestells (107) in einer ersten Drehrichtung bewirkt, um die Reibungskraft, die auf die Gleitschiene (103) ausgeübt wird, zu verringern.

2. Gleitschienenmechanismus nach Anspruch 1, wobei das Bremselement, wenn es in Eingriff steht, eine konstante Reibungskraft auf die Gleitschiene ausübt, um Bewegung des Gestells zu verhindern.

3. Gleitschienenmechanismus nach einem vorstehenden Anspruch, wobei der Bremsträger an beiden Enden einen Vorsprung beinhaltet, der angeordnet ist, um in die Gleitschiene einzugreifen und die Reibungskraft auszuüben, wenn das Gestell ausreichend gedreht wird.

4. Gleitschienenmechanismus nach einem vorstehenden Anspruch, wobei Bewegung des Gestells in Bezug zur Gleitschiene in einer zweiten linearen Richtung, entgegengesetzt zur ersten linearen Richtung, Drehung des Gestells in einer zweiten Drehrichtung, entgegengesetzt zur ersten Drehrichtung bewirkt, um die Reibungskraft, die auf die Gleitschiene ausgeübt wird, zu erhöhen.

5. Dusch-Gleitschienensystem, das eine Gleitschiene und einen Gleitschienenmechanismus nach den Ansprüchen 1 bis 4 aufweist, wobei der Gleitschienenmechanismus ein Gestell zum Halten eines Duschkopfes umfasst, wobei das Gestell entlang der Gleitschiene verschiebbar ist, und ein Haltemittel zum Halten des Gestells in einer Position entlang der Gleitschiene beinhaltet, wobei das Haltemittel durch Bewegen des Gestells betätigt wird.

6. Dusch-Gleitschienensystem nach Anspruch 5, wobei das Haltemittel angeordnet ist, um Reibung zwischen dem Haltemittel und der Gleitschiene zu regulieren, um ein mindestens im Wesentlichen konstantes Maß an Kraftbedarf für Bewegung in eine gegebene Richtung aufrechtzuerhalten.

7. Dusch-Gleitschienensystem nach Anspruch 5 oder Anspruch 6, wobei das Haltemittel angeordnet ist, sodass Bewegung des Gestells in Bezug zur Gleitschiene in einer ersten linearen Richtung ein höheres Maß an Kraft erfordert als Bewegung des Gestells in Bezug zur Gleitschiene in einer zweiten linearen Richtung, die sich von der ersten linearen Richtung unterscheidet.

8. Set zum Bereitstellen des Dusch-Gleitschienensystems nach einem der Ansprüche 5 bis 7, wobei das Set mindestens die Gleitschiene und einen Gleitschienenmechanismus nach Anspruch 1 beinhaltet.

9. Verfahren zum Verändern der Höhe des Duschkopfes, wobei der Duschkopf anfänglich durch den Gleitschienenmechanismus nach Anspruch 1 auf einer ersten Höhe an der Duschschiene gehalten wird, wobei das Verfahren Bewegen eines Gestells, das den Duschkopf hält, von der ersten Position zu einer zweiten Position an der Schiene oberhalb oder unterhalb der ersten Position beinhaltet, wobei Bewegen des Gestells das Haltemittel automatisch löst und das Haltemittel automatisch wieder in Eingriff bringt, wenn der Schieber nicht bewegt wird.

10. Verfahren nach Anspruch 9, wobei das Haltemittel Reibung zwischen dem Haltemittel und der Gleitschiene reguliert, um ein mindestens im Wesentlichen konstantes Maß an Kraftbedarf für Bewegung in eine gegebene Richtung aufrechtzuerhalten.

11. Verfahren nach Anspruch 9 oder Anspruch 10, wobei Bewegung des Gestells in Bezug zur Gleitschiene in einer ersten linearen Richtung ein höheres Maß an Kraft erfordert als Bewegung des Gestells in Bezug zur Gleitschiene in einer zweiten linearen Richtung, die sich von der ersten linearen Richtung unterscheidet.

## Revendications

1. Mécanisme de rail coulissant présentant un châssis (107) destiné à retenir une pomme de douche, dans lequel le châssis (107) peut coulisser le long d'un rail coulissant (103) et inclut un moyen de retenue destiné à retenir le châssis (107) à une position le long du rail coulissant (103), dans lequel le moyen de retenue est actionné par le mouvement du châssis (107) ; le moyen de retenue inclut un élément de freinage (151a, b) agencé pour se mettre en prise avec le rail coulissant (103) afin d'empêcher le mouvement du châssis (107) par rapport au rail (103) ; l'élément de freinage (151a, b) étant agencé sur un support de frein (145) ; et le support de frein (145) est monté de manière pivotante par rapport à un corps du châssis (107) ; le support de frein (145) pivote au centre du support de frein (145), et dans lequel la position de rotation du châssis (107) commande le niveau de force de frottement ; le support de frein (145) inclut une saillie formant l'élément de freinage (151a, b) à une extrémité, agencée pour se mettre en prise avec le rail coulissant (103), et appliquer la force de frottement lorsque le châssis (107) est suffisamment tourné ; le support de frein (145) est sollicité par un ressort (1100a, b) pour se mettre en prise dans le rail coulissant (103) ; et dans lequel le mouvement du châssis par rapport au rail coulissant (103) dans une première direction linéaire provoque la rotation du châssis (107) dans une première direction de rotation pour réduire la force de frottement appliquée au rail coulissant (103).

2. Mécanisme de rail coulissant selon la revendication 1, dans lequel l'élément de freinage applique une force de frottement constante au rail coulissant, lorsqu'il est engagé, pour empêcher le mouvement du châssis.

3. Mécanisme de rail coulissant selon une quelconque revendication précédente, dans lequel le support de frein inclut une saillie aux deux extrémités, agencée pour se mettre en prise avec le rail coulissant et appliquer la force de frottement lorsque le châssis est suffisamment tourné.

4. Mécanisme de rail coulissant selon une quelconque revendication précédente, dans lequel le mouvement du châssis par rapport au rail coulissant dans une seconde direction linéaire, opposée à la première direction linéaire, provoque la rotation du châssis dans une seconde direction de rotation, opposée à la première direction de rotation, pour augmenter la force de frottement appliquée au rail coulissant.

5. Système de rail coulissant de douche présentant un rail coulissant et un mécanisme de rail coulissant selon les revendications 1 à 4, le mécanisme de rail coulissant comprenant un châssis pour retenir une pomme de douche, le châssis pouvant coulisser le long du rail coulissant, et incluant un moyen de retenue pour retenir le châssis à une position le long du rail coulissant, dans lequel le moyen de retenue est actionné par le mouvement du châssis.

6. Système de rail coulissant de douche selon la revendication 5, dans lequel le moyen de retenue est agencé pour réguler le frottement entre le moyen de retenue et le rail coulissant de manière à maintenir un niveau de force requis au moins sensiblement constant pour le mouvement dans une direction donnée.

7. Système de rail coulissant de douche selon la revendication 5 ou la revendication 6, dans lequel le moyen de retenue est agencé de telle sorte que le mouvement du châssis par rapport au rail coulissant dans une première direction linéaire nécessite un niveau de force plus élevé que le mouvement du châssis par rapport au rail coulissant dans une seconde direction linéaire qui est différente de la première direction linéaire.

8. Kit permettant de fournir le système de rail coulissant de douche selon l'une quelconque des revendications 5 à 7, le kit incluant au moins le rail coulissant et un mécanisme de rail coulissant selon la revendication 1.

9. Procédé de modification de la hauteur de la pomme de douche, dans lequel la pomme de douche est initialement retenue à une première hauteur sur le rail de douche par le mécanisme de rail coulissant selon la revendication 1, le procédé incluant le déplacement d'un châssis retenant la pomme de douche de la première position à une seconde position sur le rail, au-dessus ou en dessous de la première position, dans lequel le déplacement du châssis libère automatiquement le moyen de retenue, et le moyen de retenue se remet en prise automatiquement lorsque le curseur n'est pas déplacé.

10. Procédé selon la revendication 9, dans lequel le moyen de retenue régule le frottement entre le moyen de retenue et le rail coulissant de manière à maintenir un niveau de force requis au moins sensiblement constant pour le mouvement dans une direction donnée.

11. Procédé selon la revendication 9 ou la revendication 10, dans lequel le mouvement du châssis par rapport au rail coulissant dans une première direction linéaire nécessite un niveau de force plus élevé que le mouvement du châssis par rapport au rail coulissant dans une seconde direction linéaire qui est différente de la première direction linéaire.
